## Europäisches Patentamt
## European Patent Office
## Office européen des brevets

(19)

(11) Veröffentlichungsnummer: **0 106 252**
**B1**

(12) **EUROPÄISCHE PATENTSCHRIFT**

(45) Veröffentlichungstag der Patentschrift:
**10.12.86**

(51) Int. Cl.⁴: **C 23 D 5/02**, C 03 C 8/14

(21) Anmeldenummer: **83109852.0**

(22) Anmeldetag: **03.10.83**

(54) **Emailfritte und Verfahren zur Zwei- und Mehrschichtemaillierung in einem Brand.**

(30) Priorität: **14.10.82 DE 3238097**

(43) Veröffentlichungstag der Anmeldung:
**25.04.84 Patentblatt 84/17**

(45) Bekanntmachung des Hinweises auf die Patenterteilung:
**10.12.86 Patentblatt 86/50**

(84) Benannte Vertragsstaaten:
**AT BE CH DE FR GB IT LI NL**

(56) Entgegenhaltungen:
**EP - A - 0 036 558**
**EP - A - 0 064 649**
**CH - A - 562 174**
**FR - A - 2 419 983**

(73) Patentinhaber: **BAYER AG, Konzernverwaltung RP**
**Patentabteilung, D-5090 Leverkusen 1 Bayerwerk (DE)**

(72) Erfinder: **Krist, Otto, Grosshurdener Berg 8,**
**D-5063 Overath (DE)**
Erfinder: **Salzburg, Herbert, Dr., Hahnenweg 3,**
**D-5000 Köln 80 (DE)**

EP 0 106 252 B1

### Beschreibung

Die Erfindung betrifft eine Emailfritte und ein Verfahren zur Zwei- und Mehrschichtemaillierung in einem Brand, wobei dem zuerst auf das Metall aufzutragendem Grundemailschlicker bestimmte organische Substanzen beigement werden, die ohne nennenswerte Beeinflussung der Schlickerrheologie und der Benetzbarkeit sowohl des Metalls als auch des als nächste Schicht (oder Zwischenschicht) aufgetragenen Zwischen- bzw. Deckemails eine Durchmischung der verschiedenen Emailschichten während des Einbrandes wirksam verhindern.

In der nicht vorveröffentlichten EP-Patentanmeldung 82 1034 87.3 (EP-A- 0 064 649) wird ein solches Verfahren beschrieben, bei dem bei der Grund- und gegebenenfalls Zwischenemailschlickerherstellung Saccharide und/oder deren Oxidations-, Reduktions- und/oder Abwandlungsprodukte (z.B. alkylierte oder veresterte Kohlenhydrate oder Formaldehydkondensationsprodukte) und/oder Polyethylenglykole zugegeben werden, wobei die Zusatzstoffe bis zu 50, vorzugsweise maximal 25, Kohlenstoffatome pro Molekül aufweisen sollen. Die Zusatzstoffe sollen im wässrig-alkalischen Emailschlicker zumindest teilweise löslich sein und keine hydrophobierende Wirkung ausüben.

Es wurde nun gefunden, dass auch Lactame eine entsprechende Wirkung zeigen.

Gegenstand der vorliegenden Erfindung ist demgemäss ein Verfahren zur Zwei- und Mehrschichtemaillierung in einem Brand durch aufeinanderfolgenden Nassauftrag von Grund-, gegebenenfalls Zwischen- und Deckemailschlickern und anschliessendem gemeinsamen Einbrand, das dadurch gekennzeichnet ist, dass bei der Grund- und gegebenenfalls Zwischenemailschlickerherstellung Lactame, deren Wasserlöslichkeit bei 25 °C und bei einem pH-Wert von 4 bis 9 grösser als 0,05 g/l ist, zugegeben werden.

Besonders bevorzugte Lactame sind ε-Caprolactam, Pyrrolidon, Dodecanlactam.

Die Lactame werden zweckmässig in Mengen unter 5 Gew.-%, bezogen auf den Emailschlicker, eingesetzt. Bevorzugt sind Mengen von 0,1 bis 3 Gew.-%, besonders bevorzugt 0,1 bis 1,5 Gew.-%.

Die Zusatzstoffe d.h. die Lactame, können dem Email bei der trockenen oder nassen Vermahlung zugegeben werden. Es ist aber auch möglich, die Zusatzstoffe in wässriger oder alkoholischer Lösung auf den bereits aufgetragenen Emailschlicker, gegebenenfalls nach Zwischentrocknung, vor Auftrag des nächsten Schlickers, z.B. durch Sprühen, aufzubringen.

Besonders bevorzugt werden die Zusatzstoffe bereits vor der Vermahlung auf die ungemahlene Emailfritte aufgebracht. Auf diese Weise kann die Dosierung des Zusatzmittels bereits durch den Emailhersteller erfolgen. Es ist somit eine an die spezielle Zusammensetzung der Rohfritte angepasste Auswahl der Lactame und deren Menge möglich, so dass der relativ rauhe Emaillierbetrieb hiervon entlastet ist. Ferner ist der Einsatz weniger wasserlöslicher Lactame auch bei nasser Vermahlung der Fritte möglich.

Gegenstand der vorliegenden Erfindung ist auch eine Emailfritte zur Zwei- und Mehrschichtemaillierung in einem Brand, die dadurch gekennzeichnet ist, dass die Fritte auf der Oberfläche zumindest teilweise mit Lactame, deren Wasserlöslichkeit bei 25 °C und bei einem pH-Wert von 4–9 oberhalb von 0,05 g/l beträgt, beschichtet ist.

Die Lactame werden zweckmässig in Mengen von bis zu 3 Gew.-%, bezogen auf die Fritte, aufgebracht. Bevorzugt sind Mengen von 0,1 bis 3 Gew.-%, besonders bevorzugt 0,15 bis 2,2 Gew.-%.

Die erfindungsgemässe Fritte kann im Emaillierbetrieb in gewohnter Weise durch Mahlen und Zugabe üblicher weiterer Schlickerbestandteile zu einem auftragsfähigen Schlicker verarbeitet werden.

Der Grundemailschlicker wird nach üblicher Auftragsmethoden auf den metallischen Werkstoff aufgetragen. Nach kurzer Zeit kann ohne Zwischentrocknung ein weiterer Zwischen- oder Deckemailschlicker aufgetragen werden. Beim Auftragen einer Zwischenschicht muss auch dem Zwischenschlicker einer der erfindungsgemässen Lactame beigegeben werden, bzw. zur Herstellung des Zwischenschichtschlickers eine erfindungsgemässe Fritte eingesetzt werden. Auch der Deckemailschlicker kann ohne Nachteil die erfindungsgemässen Zusätze enthalten. Dies ist z.B. dann zweckmässig, wenn auf die Deckschicht eine diese nur teilweise überdeckende weitere z.B. dekorative farbige Schicht aufgebracht werden soll.

Nach dem gemeinsamen Trocknen aller aufgetragenen Schichten wird bei üblichen Temperaturen eingebrannt. Das Emaillierergebnis (Haftung, Oberflächeneigenschaften, usw.) ist vollständig vergleichbar mit den bei konventioneller Emaillierung erreichbaren Qualitäten.

Gegenüber den bekannten Verfahren der Zwei-Schicht/Ein-Brand-Emaillierung weist das erfindungsgemässe Verfahren folgende Vorteile auf:

1. Es kann mit Eamilschlickern üblicher Mahlfeinheit gearbeitet werden.

2. Eine Zwischentrocknung des zuerst aufgetragenen Grundemailschlickers ist nur in Ausnahmefällen (bei grösseren Schichtstärken) notwendig.

3. Durch die nicht hydrophobierende Wirkung der Lactame kann beim Einbrand im Gegensatz zu Imprägnierungsmitteln auch das Restwasser ohne Behinderung aus dem getrockneten Emailbisquit entweichen.

4. Beim Einbrand treten praktisch keine schädlichen Reaktionsprodukte des Zusatzmittels in störender Weise auf, da die Lactame je nach Polymerisationsgrad bereits einen grossen Teil des für ihre vollständige Verbrennung notwendigen Sauerstoffs im Molekül enthalten; ebenso wird auf diese Weise eine übermässige Reduktion von Metalloxiden des Emails durch die Lactame, die ja letztlich vollständig verbrennen müssen, vermieden.

Die Erfindung ist nicht auf Emails im klassischen Sinne beschränkt, sondern ist auch auf verwandte Systeme, wie z.B. Cermets, anwendbar.

Das erfindungsgemässe Verfahren lässt sich in der oben beschriebenen Form im allgemeinen für die üblichen Blechemaillierungen mit hervorragenden Ergebnissen anwenden. Es wurde jedoch gefunden, dass die Variationsmöglichkeiten für die übrigen Parameter wie die Blechqualität, die Blechvorbehandlung, die Schlickereinstellung durch die üblichen weiteren Schlickerzusätze und die Einbrandbedingungen erheblich erweitert werden können, wenn das Grundemailpulver nach dem Mahlen eine bestimmte Teilchengrössenverteilung aufweist.

Vorzugsweise soll daher die Teilchengrösse des Emailpulvers unter 70 μm liegen. Besonders bevorzugt werden Teilchengrössen unter 60 μm eingesetzt, die durch Mahlen der Fritte, bis der Siebrückstand auf einem Sieb mit 10 000 Maschen/cm$^2$ (244 mesh) maximal 3 Gew.-% beträgt, und durch Abtrennen des Rückstands erhalten werden.

Hervorragend geeignete Teilchengrössenverteilungen sind durch folgende Parameter gekennzeichnet:

100 Gew.-% kleiner als 60 μm, und mindestens 75 Gew.-%, vorzugsweise mindestens 85 Gew.-%, grösser als 20 μm, und mindestens 50 Gew.-%, vorzugsweise mindestens 70 Gew.-% kleiner als 50 μm.

Eine weitere Möglichkeit zur Herabsetzung der an die Blechqualität und Blechvorbehandlung zu stellenden Anforderungen besteht in der Auswahl besonders geeigneter Zusammensetzungen der Rohfritten. Es wurde gefunden, dass bei Einsatz der nachfolgend näher beschriebenen Frittenzusammensetzungen sogar Gusseisen und nicht entkohlte Stähle nach dem erfindungsgemässen 2-Schicht-1-Brand-Verfahren fehlerfrei emailliert werden können.

Bevorzugt weisen die erfindungsgemäss für die Grundemailschicht einzusetzenden Rohfritten folgende Zusammensetzung auf:

| | | | |
|---|---|---|---|
| SiO$_2$ | 30–50 | Gew.-% | Summe |
| ZrO$_2$ | 0– 8 | Gew.-% | 33–53 Gew.-% |
| B$_2$O$_3$ | 5–21 | Gew.-% | |
| BaO | 14–25 | Gew.-% | Summe |
| ZnO | 0– 5 | Gew.-% | 33–40 Gew.-% |
| F | 0– 4 | Gew.-% | |
| Alkali-oxide | 10–15 | Gew.-% | |
| Haftoxide | 1– 4 | Gew.-% | |
| CaO | 0– 5 | Gew.-% | |
| SrO | 0– 5 | Gew.-% | |
| TiO$_2$ | 0– 5 | Gew.-% | Summe |
| Fe$_2$O$_3$ | 0– 5 | Gew.-% | 0–7 Gew.-% |
| P$_2$O$_5$ | 0– 2 | Gew.-% | |

Als Haftoxide werden üblicherweise CoO, NiO, MnO und/oder CuO eingesetzt.

Die Alkalioxide enthalten vorzugsweise maximal 80% Na$_2$O und darüber hinaus Li$_2$O und/oder K$_2$O.

Die Summe der obengenannten Gew.-%-Angaben soll mindestens 98, vorzugsweise 100, betragen, wobei weitere Bestandteile gegebenenfalls in solchen Mengen vorhanden sein können, wie diese als unvermeidliche Bestandteile der eingesetzten Rohstoffe in die Rohfritte eingeführt werden.

Besonders bevorzugt werden die Rohfritten für das erfindungsgemässe Verfahren erfindungsgemäss mit den erfindungsgemässen Lactamen oberflächenbeschichtet.

Da üblicherweise Frittengemische für Herstellung des Grundemailschlickers eingesetzt werden, sollen die erfindungsgemäss bevorzugten Fritten mindestens 50 Gew.-%, vorzugsweise mindestens 60 Gew.-%, der Frittenmischung ausmachen.

Mit der erfindungsgemäss bevorzugten Kombination aus mit Lactamen beschichteter bevorzugter Fritte und anschliessender Einstellung der erfindungsgemässen Teilchengrössenverteilung steht ein System für ein äusserst robustes 2-Schicht-1-Brand-Emaillierverfahren zur Verfügung, das bezüglich seiner Anfälligkeit gegen schwankende Substratqualitäten und deren Vorbehandlung sowie Schlickereinstellung und Brandbedingungen üblichen Mehrfach-Brand-Emaillierverfahren überlegen ist. Selbst die im allgemeinen relativ schwierigen Kantenemaillierungen stellen kein Problem dar.

Die Erfindung wird durch die nachfolgenden Beispiele weiter erläutert:

Beispiele 1 bis 4

Aus den Grundemailfritten A, B, C und D der chemischen Analyse gemäss Tabelle 1 wurden die Grundemailschlicker Nr. 1 bis Nr. 4 gemäss Tabelle 2 hergestellt. Dabei wurden Frittenbestandteile, Mühlenzusätze und Zusatzstoffe in einer Kugelmühle bis zu einer Mahlfeinheit, die durch einen Rückstand von weniger als 5% auf einem Sieb von 3600 Maschen/cm$^2$ definiert ist, gemahlen. Die Schlicker wurden dann auf je ein durch ein übliches Beizverfahren vorbehandeltes Stahlblech aufgespritzt.

Ein Weissemailschlicker (Beispiele 1–4) wurde durch Mahlen einer Fritte der chemischen Zusammensetzung 44% SiO$_2$, 17% B$_2$O$_3$, 7,5% Na$_2$O, 7,8% K$_2$O, 1% Li$_2$O, 1,2% ZrO$_2$, 19% TiO$_2$, 1,2% P$_2$O$_5$ und 1,3% F mit Mühlenzusätzen von 3,5 Teilen Ton, 1,5 Teilen hochdisperses SiO$_2$, 0,3 Teilen NaAlO$_2$, 0,2 Teilen K$_2$CO$_3$ und 45 Teilen Wasser auf 100 Teile Fritte gewonnen (Gew.-% und Gew.-Teile).

Der Weissemailschlicker wurde auf die mit den 4 Grundemailschlickern beschichteten Metallplatten aufgetragen, danach getrocknet. Der gemeinsame Einbrand erfolgte in üblicher Weise 3 Minuten lang bei 820 °C.

Tabelle 1

| Zusammen-setzung | Fritte A | B | C | D |
|---|---|---|---|---|
| $SiO_2$ | 48 | 46 | 37 | 47 |
| $Al_2O_3$ | 6 | 7 | 4 | 4 |
| $B_2O_3$ | 16 | 15 | 19 | 6 |
| $Na_2O$ | 19 | 14 | 15 | 18 |
| $K_2O$ | 4 | 3 | 4 | 2 |
| CaO | 5,2 | 6,7 | 10 | 10 |
| NiO | 1,3 | 0,4 | 1,5 | 1 |
| CoO | 0,3 | 0,4 | 0,5 | 0,2 |
| MnO | – | – | – | 1 |
| $P_2O_5$ | – | 2,1 | 0,6 | 2 |
| BaO | – | 1,4 | 4 | 6 |
| $Fe_2O_3$ | – | 2 | – | 0,4 |
| CuO | – | – | 0,2 | – |
| $F^-$ | 1,2 | 2 | 4,2 | 6,2 |

(Angaben in Gew.-Teilen)

Tabelle 2

| | Grundemailschlicker-Nr. 1 | 2 | 3 | 4 |
|---|---|---|---|---|
| Fritte: A | 25 | 20 | 20 | 30 |
| B | 25 | 20 | 20 | 40 |
| C | 50 | 40 | 40 | 30 |
| D | – | 20 | 20 | – |
| Mühlenzusätze: | | | | |
| $SiO_2$ (Quarz) | 15 | 15 | 10 | – |
| Ton | 3 | – | 5 | 7 |
| $NaNO_2$ | 0,1 | 0,1 | 0,1 | 0,1 |
| $NaAlO_2$ | 0,3 | 0,8 | 0,3 | 0,2 |
| $Na_4B_2O_7 \cdot 10 H_2O$ | 0,1 | 0,1 | – | 0,1 |
| K-Feldspat | – | – | – | 5 |
| Ca-Silikathydrat | 0,5 | 0,5 | – | – |
| $H_2O$ | 45 | 40 | 45 | 45 |

Beispiele für erfindungsgemässe Zusätze:

| | | | | |
|---|---|---|---|---|
| ε-Caprolactam | 0,5 | 0,05 | – | 0,5 |
| Dodecanlactam | – | 0,1 | 0,7 | – |

(Angaben in Gew.-Teilen)

### Beispiele 5 bis 12

Ein Semiopakemailschlicker wurde unter Verwendung einer Fritte der Zusammensetzung 45% $SiO_2$, 10% $Al_2O_3$, 14,5% $B_2O_3$, 4,9% $TiO_2$, 12% $Na_2O$, 4,3% $K_2O$, 4,1% CaO und 5,2% F unter Zugabe von 4 Teilen Ton, 0,5 Teilen $K_2CO_3$, 40 Teilen Wasser und 5 Teilen Farbkörper auf 100 Teile Fritte gemahlen. Als Farbkörper wurden verschiedene handelsübliche Rutil- und/oder Spinellfarbkörper eingesetzt. Die Schlicker wurden auf je 4 mit Grundemailschlicker beschichtete Metallplatten nach Beispielen 1 bis 4 aufgebracht, getrocknet und eingebrannt.

### Beispiele 13 bis 16

In einem Transparentemailschlicker wurden unter Verwendung einer Fritte der Zusammensetzung 53% $SiO_2$, 10,3% $Al_2O_3$, 14,5% $B_2O_3$, 12% $Na_2O$, 4,3% $K_2O$, 4,1% CaO und 1,8% F unter Zugabe von 4 Teilen Ton, 0,3% $K_2CO_3$ und 40 Teilen Wasser und 4 Teilen verschiedener handelsüblicher Silikatfarbkörper, Cadmiumsulfid- bzw. Cadmiumsulfosolenid-Farbkörper eingesetzt.

Die Schlicker wurden auf mit Grundemailschlicker beschichtete Metallplatten nach Beispielen 1 bis 4 aufgebracht und entsprechend getrocknet und eingebrannt.

### Beispiel 17

Auf dem Grundemailbisquit gemäss Beispiel 4 unter Verwendung des Schlickers Nr. 4 gemäss Tabelle 2 wurde ein Zwischenweiss mit 0,25 Teilen Caprolactam als erfindungsgemässem Zusatz aufgetragen und getrocknet. Auf diesem Zweischichtbisquit wurde dann ein Majolikaschlicker mit einer Frittenzusammensetzung wie folgt gegeben: 46% $SiO_2$, 3% $Al_2O_3$, 14% $B_2O_3$, 19% $Na_2O$, 3% $K_2O$, 2% MnO, 7% $Fe_2O_3$, 4% $TiO_2$, 2% F. Anschliessend wurde getrocknet und gemeinsam eingebrannt.

Die Emaillierungen 1 bis 17 waren rissfrei und zeigten keinerlei Blasenbildung. Durch Schlagversuche konnte kein Abplatzen von der Stahlblechgrundlage beobachtet werden. Es wurden keine Emaillierfehler wie Nadelstiche oder schwarze Punkte beobachtet; die Emaillierungen waren einwandfrei.

### Patentansprüche

1. Verfahren zur Zwei- und Mehrschichtemaillierung in einem Brand durch aufeinanderfolgenden Nassauftrag von Grund-, gegebenenfalls Zwischen- und Deckemailschlickern und anschliessendem gemeinsamen Einbrand, dadurch gekennzeichnet, dass bei der Grund- und gegebenenfalls Zwischenemailschlickerherstellung Lactame, deren Wasserlöslichkeit bei 25 °C und bei einem pH-Wert von 4 bis 9 grösser als 0,05 g/l ist, zugegeben werden.

2. Verfahren nach Anspruch 1, dadurch gekennzeichnet, dass die Lactame in Mengen von 0,1 bis 3 Gew.-%, vorzugsweise 0,1 bis 1,5 Gew.-%, bezogen auf den Emailschlicker, enthalten sind.

3. Verfahren nach einem der Ansprüche 1 oder 2, dadurch gekennzeichnet, dass das Grundemailpulver eine Teilchengrösse unter 60 μ aufweist.

4. Verfahren nach einem der Ansprüche 1 bis 3, dadurch gekennzeichnet, dass ein Grundemail folgender Zusammensetzung eingesetzt wird:

| | | | |
|---|---|---|---|
| $SiO_2$ | 30–50 | Gew.-% | Summe |
| $ZrO_2$ | 0– 8 | Gew.-% | 33–53 Gew.-% |
| $B_2O_3$ | 5–21 | Gew.-% | |
| BaO | 14–25 | Gew.-% | Summe |
| ZnO | 0– 5 | Gew.-% | 33–40 Gew.-% |
| F | 0– 4 | Gew.-% | |
| Alkalioxide | 10–15 | Gew.-% | |
| Haftoxide | 1– 4 | Gew.-% | |
| CaO | 0– 5 | Gew.-% | |

| | | |
|---|---|---|
| SrO | 0– 5 | Gew.-% |
| TiO$_2$ | 0– 5 | Gew.-% Summe |
| Fe$_2$O$_3$ | 0– 5 | Gew.-% 0–7 Gew.-% |
| P$_2$O$_5$ | 0– 2 | Gew.-% |

5. Emailfritte zur Zwei- und Mehrschichtemaillierung in einem Brand, dadurch gekennzeichnet, dass die Fritte auf der Oberfläche zumindest teilweise mit Lactamen, deren Wasserlöslichkeit bei 25 °C und bei einem pH-Wert von 4 bis 9 grösser als 0,05 g/l ist, beschichtet ist.

6. Emailfritte nach Anspruch 5, dadurch gekennzeichnet, dass die Lactame in Mengen von bis zu 3 Gew.-%, vorzugsweise 0,1 bis 3, besonders bevorzugt 0,15 bis 2,2 Gew.-%, bezogen auf die Fritte, vorhanden sind.

7. Emailfritte nach einem der Ansprüche 6 oder 7, gekennzeichnet durch eine Zusammensetzung (ohne Beschichtung) von

| | | |
|---|---|---|
| SiO$_2$ | 30–50 | Gew.-% Summe |
| ZrO$_2$ | 0– 8 | Gew.-% 33–53 Gew.-% |
| B$_2$O$_3$ | 5–21 | Gew.-% |
| BaO | 14–25 | Gew.-% |
| ZnO | 0– 5 | Gew.-% Summe |
| F | 0– 4 | Gew.-% 33–40 Gew.-% |
| Alkalioxide | 10–15 | Gew.-% |
| Haftoxide | 1– 4 | Gew.-% |
| CaO | 0– 5 | Gew.-% |
| SrO | 0– 5 | Gew.-% |
| TiO$_2$ | 0– 5 | Gew.-% Summe |
| Fe$_2$O$_3$ | 0– 5 | Gew.-% 0–7 Gew.-% |
| P$_2$O$_5$ | 0– 2 | Gew.-% |

## Revendications

1. Procédé de fabrication d'un émaillage en deux et plusieurs couches en une seule cuisson par l'application humide successive de barbotines de fond, éventuellement intermédiaires et de couverture et cuisson unique en commun consécutive, caractérisé en ce qu'on ajoute dans la fabrication des barbotines d'émail de fond et éventuellement intermédiaires des lactames dont la solubilité dans l'eau à 25 °C et à une valeur de pH de 4 à 9 est supérieure à 0,05 g/litre.

2. Procédé selon la revendication 1, caractérisé en ce que les lactames sont contenues en des quantités de 0,1 à 3% en poids, de préférence de 0,1 à 1,5% en poids par rapport à la barbotine d'émail.

3. Procédé selon l'une des revendications 1 ou 2, caractérisé en ce que la poudre d'émail de fond présente une dimension de particule inférieure à 60 µ.

4. Procédé selon l'une des revendications 1 à 3, caractérisé en ce qu'on utilise un émail de fond de composition suivante:

| | | | |
|---|---|---|---|
| SiO$_2$ | 30–50% | en poids | somme |
| ZrO$_2$ | 0– 8% | en poids | 33–53% |
| | | | en poids |
| B$_2$O$_3$ | 5–21% | en poids | |
| BaO | 14–25% | enpoids | somme |
| ZnO | 0– 5% | en poids | 33–40% |
| F | 0– 4% | en poids | en poids |

| | | | |
|---|---|---|---|
| Oxydes-alcalins | 10–15% | en poids | |
| Oxydes-adhésifs | 1– 4% | en poids | |
| CaO | 0– 5% | en poids | |
| SrO | 0– 5% | en poids | somme |
| TiO$_2$ | 0– 5% | en poids | 0–7% |
| Fe$_2$O$_3$ | 0– 5% | en poids | en poids |
| P$_2$O$_5$ | 0– 2% | en poids | |

5. Fritte d'émail pour émaillage en deux et plusieurs couches en une cuisson, caractérisée en ce que la fritte est enduite sur la surface tout au moins partiellement avec des lactames dont la solubilité dans l'eau à 25 °C et à une valeur de pH de 4 à 9 est supérieure à 0,05 g/litre.

6. Fritte d'émail selon la revendication 5, caractérisée en ce que les lactames sont présentes en des quantités allant jusqu'à 3% en poids, de préférence de 0,1 à 3 et tout particulièrement de 0,15 à 2,2% en poids par rapport à la fritte.

7. Fritte d'émail selon l'une des revendications 5 ou 6, caractérisée par une composition (sans couchage) de

| | | | |
|---|---|---|---|
| SiO$_2$ | 30–50% | en poids | somme |
| ZrO$_2$ | 0– 8% | en poids | 33–53% |
| | | en poids | en poids |
| B$_2$O$_3$ | 5–21% | en poids | somme de |
| BaO | 14–25% | en poids | 33–40% |
| ZnO | 0– 5% | en poids | en poids |
| F | 0– 4% | en poids | |
| Oxades-alcalins | 10–15% | en poids | |
| Oxydes-adhésifs | 1– 4% | en poids | |
| CaO | 0– 5% | en poids | |
| SrO | 0– 5% | en poids | somme de |
| TiO$_2$ | 0– 5% | en poids | 0–7% |
| Fe$_2$O$_3$ | 0– 5% | en poids | en poids |
| P$_2$O$_5$ | 0– 2% | en poids | |

## Claims

1. Process for two- and multi-layer enamelling in one firing by the successive wet application of ground enamel slips, optionally intermediate enamel slips and cover enamel slips and subsequent combined firing-on, characterised in that lactams having a water-solubility of greater than 0.05 g/l at 25 °C and at a pH value of 4 to 9 are added during the preparation of the ground enamel slip and optional intermediate enamel slip.

2. Process according to Claim 1, characterised in that the lactams are contained in quantities of 0.1 to 3% by weight, preferably 0.1 to 1.5% by weight, based on the enamel slip.

3. Process according to one of Claims 1 or 2, characterised in that the ground enamel powder has a particle size of less than 60 µ.

4. Process according to one of Claims 1 to 3, characterised in that a ground enamel of the following composition is used:

| $SiO_2$ | 30–50% | by weight | total |
|---|---|---|---|
| $ZrO_2$ | 0– 8% | by weight | 33–53% |
| | | | by weight |
| $B_2O_3$ | 5–21% | by weight | |
| BaO | 14–25% | by weight | total |
| ZnO | 0– 5% | by weight | 33–40% |
| F | 0– 4% | by weight | by weight |
| alkali me-tal oxides | 10–15% | by weight | |
| adhesive oxides | 1– 4% | by weight | |
| CaO | 0– 5% | by weight | |
| SrO | 0– 5% | by weight | |
| $TiO_2$ | 0– 5% | by weight | total |
| $Fe_2O_3$ | 0– 5% | by weight | 0–7% |
| $P_2O_5$ | 0– 2% | by weight | by weight |

5. Enamel frit for two- and multi-layer enamelling in one firing, characterised in that the surface of the frit is coated at least partly with lactams having a water solubility of greater than 0.05 g/l at 25 °C and at a pH value of 4 to 9.

6. Enamel frit according to Claim 5, characterised in that the lactams are present in quantities of up to 3% by weight, preferably 0.1 to 3, particularly preferably 0.15 to 2.2% by weight, based on the frit.

7. Enamel frit according to one of Claims 6 or 7, characterised by a composition (without coating) of

| $SiO_2$ | 30–50% | by weight | total |
|---|---|---|---|
| $ZrO_2$ | 0– 8% | by weight | 33–53% |
| | | | by weight |
| $B_2O_3$ | 5–21% | by weight | |
| BaO | 14–25% | by weight | total |
| ZnO | 0– 5% | by weight | 33–40% |
| F | 0– 4% | by weight | by weight |
| alkali me-tal oxides | 10–15% | by weight | |
| adhesive oxides | 1– 4% | by weight | |
| CaO | 0– 5% | by weight | |
| SrO | 0– 5% | by weight | |
| $TiO_2$ | 0– 5% | by weight | total |
| $Fe_2O_3$ | 0– 5% | by weight | 0–7% |
| $P_2O_5$ | 0– 2% | by weight | by weight |